# EUROPÄISCHE PATENTANMELDUNG

(11) **EP 0 973 319 A1**
(43) Veröffentlichungstag der Anmeldung: **19.01.2000**
(21) Anmeldenummer: 98122796.0
(22) Anmeldetag: 01.12.1998
(51) Int. Cl.: H04M 17/02

(54) **Öffentlich zugängliches Kommunikationsendgerät mit einem kameramodul**

(30) Priorität: 16.07.1998 DE 29812711 U
(71) Anmelder: SIEMENS AKTIENGESELLSCHAFT, 80333 München (DE)
(72) Erfinder: Honsel, Sigolf, 81369 München (DE); Urbigkeit, Frank, 81739 München (DE)

(57) **Zusammenfassung**

Ein z. B. aus einem Wertkartenfernsprecher (1, 2, 3) und einem Münzmodul (4) bestehendes Kommunikationsendgerät soll so gestaltet werden, daß Aufbruchversuche rechtzeitig erkannt und gemeldet werden.
Dies erfolgt dadurch, daß innerhalb des Kommunikationsendgerätes (1, 2, 3, 4) ein Kameramodul (9) angeordnet ist, durch das Aufnahmen in regelmäßigen zeitlichen Abständen erstellt und in einem Speicher abgelegt werden. Weiterhin ist in dem Kommunikatinsendgerät (1, 2, 3, 4) eine Sensorik vorgesehen, über die bei einem Aufbruchversuch die Aufzeichnung der Aufnahmen zeitlich verzögert unterbrochen und eine Kenndaten des Gerätes enthaltende Meldung an eine vorbestimmte Empfangsstelle abgegeben wird.

## Beschreibung

Die vorliegende Erfindung betrifft ein öffentlich zugängliches Kommunikationsendgerät, das als Wertkartenfernsprecher, als Münzfernsprecher oder als ein einem Wertkartenfernsprecher zugeordnetes Münzmodul gestaltet ist.

Öffentlich zugängliche Automaten, die gegen Einwurf von Münzen Dienstleistungen erbringen, werden häufig aufgebrochen, um an den in der Geldkassette angesammelten Betrag zu gelangen. Dies trifft auch in hohem Maße auf Münzfernsprecher zu, bei denen zur Verhinderung des Aufbruchs viele Sicherheitsmaßnahmen ergriffen worden sind. Neben der mechanischen Absicherung der Münzkassette gegen Aufhebeln, Aufbohren usw. sind bestimmte Typen von Münzfernsprechern so eingerichtet, daß bei Unregelmäßigkeiten, z. B. das Fehlen der Münzkassette für einen eine Minute überschreitenden Zeitraum selbständig eine Telefonleitung belegt und eine vorher programmierte Teilnehmernummer angewählt wird. Bei diesem angewählten Teilnehmer ist ein spezielles Signalempfangsgerät an die Telefonleitung angeschlossen, das die vom Münzfernsprecher abgesetzte Meldung empfängt und eine bestimmte Anzahl von Meldungen speichert. Die Meldung beinhaltet unter anderem die Standortnummer des Münztelefons sowie die Mitteilung des Fehlens der Münzkassette.

Als nachteilig ist es in diesem Fall anzusehen, daß zum Empfang der Nachricht ein spezielles, zu diesem Zweck entwickeltes Signalempfangsgerät zum Einsatz gelangen muß, das aufgrund geringer Stückzahlen entsprechend teuer ist. Ein weiterer Nachteil besteht darin, daß bei Abgabe der Meldung die Münzkassette bereits fehlt, d. h., der Aufbruch hat bereits stattgefunden und es ist kostbare Zeit vergangen, den Täter zu fassen.

Auch bei Wertkartenfernsprechern wird häufig versucht, durch Einbringen von gefälschten Wertkarten in unberechtigter Weise Dienstleistungen zu erlangen.

Aufgabe der vorliegenden Erfindung ist es daher, das Kommunikationsendgerät so zu gestalten, daß Manipulationsversuche, insbesondere Aufbruchversuche rechtzeitig erkannt und gemeldet werden.

Gemäß der Erfindung wird diese Aufgabe dadurch gelöst, daß innerhalb des Kommunikationsendgerätes ein Kameramodul angeordnet ist, durch das Aufnahmen in regelmäßigen zeitlichen Abständen erstellt und in einem Speicher abgelegt werden, daß weiterhin in dem Kommunikationsendgerät eine Sensorik vorgesehen ist, über die bei einem Aufbruchversuch die Aufzeichnung der Aufnahmen zeitlich verzögert unterbrochen und eine Kenndaten des Gerätes enthaltende Meldung an eine vorbestimmte Empfangsstelle abgegeben wird.

In diesem Fall wird bereits vor einem Aufbruchversuch eine Serie von Aufnahmen in zeitlich vorbestimmten Abständen erstellt und in einem Speicher abgelegt, so daß der den Aufbruch durchführende Täter schon bei dem Betreten des Telefonraumes aufgenommen wird. Zu Beginn des Aufbruchs werden nur noch einige Aufnahmen erstellt, da in diesem Fall durch das Ansprechen der Sensorik sofort eine Meldung über die an eine vorbestimmte Empfangsstelle, z. B. an ein Polizeirevier geschaltete Leitung abgesetzt wird. Bei Eintreffen dieser Meldung können somit unmittelbar Maßnahmen ergriffen werden, aufgrund der in der Meldung angegebenen Standortangaben das öffentlich zugängliche Kommunikationsendgerät auf schnellstmöglichem Weg zu erreichen.

Dabei kann der Speicher in dem Kommunikationsendgerät, an der Empfangsstelle oder an einer zentralen Stelle vorgesehen werden. Vorzugsweise wird dieser Speicher als nicht flüchtiger Ringspeicher ausgebildet, in dem die zuletzt eingehenden Daten die bereits im Speicher vorhandenen Daten überschreiben.

Das Kameramodul kann dabei z. B. von einer Elektronik angesteuert werden, die sich auf einer zusätzlichen Baugruppe der bereits in dem Kommunikationsendgerät installierten Hauptbaugruppe befindet. Hierbei besteht die Möglichkeit, die Bildinformationen über Schnittstellen der Hauptbaugruppe des Kommunikationsendgerätes zu steuern. Möglich ist dabei auch die Übertragung der Bildinformationen an ein mit dem Kommunikationsendgerät zusammenarbeitendes Hintergrundsystem.

Innerhalb des Kommunikationsendgerätes ist heutzutage schon ein Sensor angeordnet, der dazu dient, die Telefonraumbeleuchtung zu überwachen. Dieser Lichtsensor ist hinter der Abdeckung für das Display z. B. im Wertkartenfernsprecher angeordnet. Eine derartige verdeckte Anordnung kann auch für das in der heutigen Zeit nur sehr geringe Abmessungen aufweisende Kameramodul gewählt werden, so daß der den Aufbruch durchführende Täter nicht erkennen kann, ob ein Kameramodul oder ein Sensor installiert ist. Die Überwachung der Telefonraumbeleuchtung kann in diesem Fall von dem Kameramodul übernommen werden.

Die Erfindung soll im folgenden anhand eines Ausführungsbeispiels näher erläutert werden.

Es zeigt jeweils in perspektivischer Ansicht
Figur 1 eine erste Ausführungsform eines auf ein separates Münzmodul angeordneten Wertkartenfernsprechers,
Figur 2 eine zweite Ausführungsform eines mit einem separaten Münzmodul verbundenen Wertkartenfernsprechers,
Figur 3 eine dritte Ausführungsform eines mit einem separaten Münzmodul verbundenen Wertkartenfernsprechers.

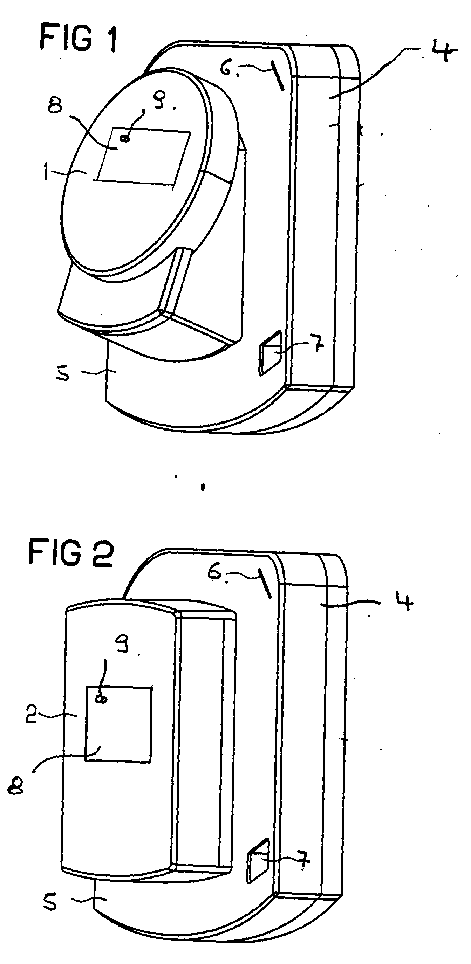

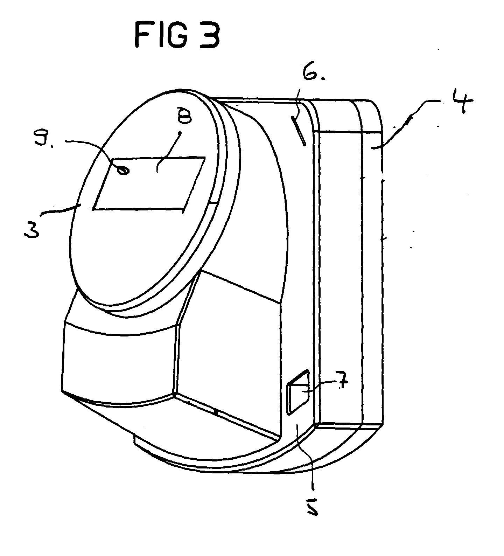

Bei den vorliegenden Anordnungen soll bei einem Wertkartenfernsprecher die Möglichkeit geschaffen werden, zum Telefonieren neben der Wertkarte auch Münzen zu verwenden. Zu diesem Zweck sind den in den Figuren 1, 2 und 3 dargestellten Wertkartenfernsprechern 1, 2 und 3 jeweils das gleiche Münzmodul 4 zugeordnet. Diese beiden jeweils kombinierten Geräte 1 und 4 bzw. 2 und 4 bzw. 3 und 4 sind miteinander elektrisch und mechanisch verbunden.

Das Münzmodul 3 ist als separates Bauteil gestaltet, wobei die drei Wertkartenfernsprecher 1, 2 und 3 in den Ausführungsbeispielen nur angedeutet sind, ohne Details wie Kartenaufnahme, Hörer und Anschlußschnur, Sondertasten usw. näher zu zeigen. Hierbei ist lediglich die außermittige Befestigung der Wertkartenfernsprecher 1, 2 und 3 auf dem Münzmodul 4 von Bedeutung, da durch diese Anordnung auf der in der Bildebene rechts befindlichen Vorderfront 5 des Gehäuseteils 4 hinreichend Platz zur Verfügung steht, um den als Schlitz gestalteten Münzeinwurf 6 sowie die Münzrückgabe 7 vorzusehen. Durch eine derartige Anordnung der Wertkartenfernsprecher 1, 2 und 3 sowie dem Münzeinwurf 6 und der Münzrückgabe 7 wird dem Benutzer signalisiert, daß er dieses öffentliche Kommunikationsendgerät wahlweise mit Münzen oder Wertkarten betreiben kann. Innerhalb des Münzmoduls können Vorrichtungen zur elektronischen Prüfung und Weiterleitung von Münzen sowie eine Münzkassette vorgesehen werden.

Das Kommunikationsendgerät ist mit einem Kameramodul ausgestattet und somit in der Lage, bei einem Aufbruchversuch den Täter bildlich wiederzugeben. Dieses Kameramodul 9 ist als Kreis angedeutet und hinter der Abdeckung 8 für die Displayanzeige installiert. Dadurch kann es vom Täter nicht sofort erkannt werden. Mittels des Kameramoduls können z. B. in zeitlich vorbestimmten Abständen Aufnahmen erstellt werden.

In dem Kommunikationsendgerät ist neben dem Kameramodul 9 eine Sensorik angeordnet, die z. B. auf Erschütterungen wie Aufhebeln oder Aufbohren oder das Eindringen in einen Raum, z. B. in den Raum des die Münzkassette enthaltenden Münzmoduls anspricht. Bei einem Aufbruchversuch wird außerdem über die Sensorik automatisch eine Leitung belegt, die zu einer vorbestimmten Empfangsstelle, z. B. zu einem Polizeirevier geschaltet ist. Über diese Leitung wird bei dem Aufbruchversuch eine Meldung abgesetzt, die z. B. die Standortdaten des Kommunikationsendgerätes beinhaltet.

Bei dem Aufbruchversuch werden die Aufzeichnungen des Kameramoduls zeitlich verzögert unterbrochen. Durch die Meldung des Aufbruchversuches kann der Täter noch am Tatort gestellt und mittels der Aufnahmen überführt werden.

Das Kameramodul 9 kann von einer Elektronik angesteuert werden, die sich auf einer zusätzlichen Baugruppe der Hauptbaugruppe des Kommunikationsendgerätes befindet. Die Steuerung bzw. Übertragung der Bildinformationen an das Kommunikationsendgerät kann z. B. über Erweiterungsschnittstellen der Hauptbaugruppe des Kommunikationsendgerätes erfolgen. Von dieser Hauptbaugruppe ist auch eine Übertragung an ein mit dem Kommunikationsendgerät zusammenarbeitendes Hintergrundsystem möglich.

Die Bilddaten können in einem nicht flüchtigen Speicher des Kommunikationsendgerätes abgelegt und auf Abruf bereitgehalten werden. Dabei kann die Aufnahme der Bilder in regelmäßigen zeitlichen Abständen erfolgen. Die sich ergebenden Daten werden in einem nicht flüchtigen Speicher abgelegt, der z. B. als Ringspeicher ausgebildet ist, d. h., in diesem Fall überschreiben die neuesten Daten automatisch die ältesten Daten.

### Bezugszeichenliste

- 1: Wertkartenfernsprecher
- 2: Wertkartenfernsprecher
- 3: Wertkartenfernsprecher
- 4: Münzmodul
- 5: Vorderfront
- 6: Münzeinwurf
- 7: Münzrückgabe
- 8: Abdeckung
- 9: Kameramodul

## Patentansprüche

1. Öffentlich zugängliches Kommunikationsendgerät, das als Wertkartenfernsprecher, als Münzfernsprecher oder als ein einem Wertkartenfernsprecher (1, 23) zugeordnetes Münzmodul (4) gestaltet ist, **dadurch gekennzeichnet**, daß innerhalb des Kommunikationsendgerätes (1, 2, 3, 4) ein Kameramodul (9) angeordnet ist, durch das Aufnahmen in regelmäßigen zeitlichen Abständen erstellt und in einem Speicher abgelegt werden, daß weiterhin in dem Kommunikationsendgerät (1, 2, 3, 4) eine Sensorik vorgesehen ist, über die bei einem Aufbruchversuch die Aufzeichnung der Aufnahmen zeitlich verzögert unterbrochen und eine Kenndaten des Gerätes enthaltende Meldung an eine vorbestimmte Empfangsstelle abgegeben wird.

2. Kommunikationsendgerät nach Anspruch 1, **dadurch gekennzeichnet**, daß der Speicher als nicht flüchtiger Ringspeicher ausgebildet ist, in dem die zuletzt eingehenden Daten die bereits im Speicher vorhandenen Daten automatisch überschreiben.

3. Kommunikationsendgerät nach Anspruch 1, **dadurch gekennzeichnet**, daß das Kameramodul (9) von einer Elektronik angesteuert wird, die sich auf einer zusätzlichen Baugruppe der Hauptbaugruppe des Kommunikationsendgerätes (1, 2, 3, 4) befindet.

4. Kommunikationsendgerät nach Anspruch 1, **dadurch gekennzeichnet**, daß die Steuerung der Bildinformationen über Schnittstellen der Hauptbaugruppe des Kommunikationsendgerätes (1, 2, 3, 4) erfolgt, wobei eine Übertragung der Bildinformationen an ein Hintergrundsystem durchführbar ist.

5. Kommunikationsendgerät nach Anspruch 1, **dadurch gekennzeichnet**, daß das Kameramodul (9) hinter der Abdeckung (8) für das Display im Wertkartenfernsprecher (1, 2, 3) oder Münzmodul (4) angeordnet ist.
